# EUROPÄISCHE PATENTSCHRIFT

(11) **EP 2 615 382 B1**
(45) Veröffentlichungstag und Bekanntmachung des Hinweises auf die Patenterteilung: **13.10.2021**
(21) Anmeldenummer: 12180522.0
(22) Anmeldetag: 15.08.2012
(51) Int. Cl.: F24C 15/20, B01D 53/04, B01D 46/00

(54) **Filterelement und Dunstabzugsvorrichtung**
Filter element and fume hood device
Élément de filtre et hotte aspirante

(30) Priorität: 22.08.2011 DE 102011081297
(43) Veröffentlichungstag der Anmeldung: 17.07.2013
(73) Patentinhaber: BSH Hausgeräte GmbH, 81739 München (DE)
(72) Erfinder: Eich, Holger, 76287 Rheinstetten (DE); Metz, Daniel, 76689 Karlsdorf-Neuthard (DE); Schnatz, Martina, 75015 Bretten (DE)

(56) Entgegenhaltungen:
- EP-A1- 0 069 323
- EP-A2- 0 074 063
- DE-A1- 3 719 415
- DE-A1-102009 044 675
- JP-A- 2005 305 268
- JP-A- 2009 213 759
- US-A1- 2005 028 498
- None

## Beschreibung

Die vorliegende Erfindung betrifft ein Filterelement und eine Dunstabzugshaube.

Dunstabzugshauben sollen unter anderem Gerüche aus dem Kochwrasen beseitigen. Üblicherweise werden zu diesem Zweck Aktivkohlefilter eingesetzt. Aktivkohle ist als breitbandiges Adsorptionsmittel bekannt. Viele Gerüche und auch Wasser werden von Aktivkohlefiltern gut adsorbiert. Allerdings ist es aufgrund der Natur von Aktivkohle nicht oder nur schwer möglich einzelne Gerüche gezielt zu adsorbieren und die Adsorptionsvorgänge in dem Filterelement gezielt einzustellen.

In der DE 10 2009 044 675 A1 wird ein Filtermaterial für Geruchs- und Absorptionsfilter und ein Verfahren zur Herstellung desselben beschrieben. Das Filtermaterial wird aus einer expandierten Absorbensschüttung, die Agglomerate umfasst, gebildet. Die Agglomerate bestehen überwiegend aus Absorbenpartikeln, die mit einem Bindemittel verklebt sind. Nachteilig an diesem Filtermaterial ist, dass das Filtermaterial nicht so innerhalb des Filterelements angeordnet werden kann, dass eine gezielte Abscheidung unterschiedlicher Verunreinigungen mögliche wäre.

Eine Dunstabzugshaube, die mit Hilfe einer Lufteintrittsöffnung verunreinigte Luft absaugt, die verunreinigte Luft reinigt und die gereinigte Luft wiederum über eine Luftaustrittsöffnung abgibt wird in der JP 2009 2137589 A beschrieben. Des Weiteren sind in der Dunstabzugshaube ein anorganischer poröser Filter und ein Desodorierungsfilter so angeordnet, dass diese mit der Lufteintrittsöffnung und Luftaustrittsöffnung der Dunstabzugshaube kommunizieren können. Auch hier ist es nachteilig, dass das Filtermaterial nicht so innerhalb des Filterelements angeordnet ist, dass eine gezielte Abscheidung unterschiedlicher Verunreinigungen möglich wäre.

In der JP 2005 305268 A wird Material zur Desodorierung für eine Dunstabzugshaube beschrieben, das fähig ist die desodorierende Kapazität über einen langen Zeitraum zu halten. Das Material besteht hauptsächlich aus wasserhaltigem Magnesiumsilikat, das mit Titanoxid, Mangansulfid, Wolframoxid, Zinkoxid oder Kupferoxid vermischt wird. Nachteilig an diesem Filtermaterial ist, dass außer mineralische Adsorber weitere Bestandteile als Filtermaterial verwendet werden, wodurch der Aufwand der Herstellung erhöht wird und dementsprechend auch die Kosten.

In der US 2005/0028498 A1 wird eine Separationskassette offenbart, die ein erstes Filtermedium, ein zweites Filtermedium und einen Rahmen umfasst. Das zweite Filtermedium ist benachbart hinter dem ersten Filtermedium angeordnet. Der Rahmen ist so konfiguriert, dass er das erste und zweite Filtermedium hält. Die Filterkassette ist so konfiguriert, dass sie ein oder mehrere in einem Gasstrom mitgeführten Substanzen in einer Dunstabzugshaube separiert.

In der EP0069323 A1 wird ein Filterelement offenbart, insbesondere für Küchendunsthauben u.dgl., welches zwei Schichten von körnigem Filtermittel enthält. Als körniges Filtermittel wird vorzugsweise Aktivkohle, imprägniert oder nicht-imprägniert, eingesetzt, obwohl auch andere bekannte körnige Filtermittel, wie z.B. alkalisch oder sauer-reagierende Sorbentien, Tonerde, Molekularsieb, Silicagel u.dgl. Verwendung finden können.

Aufgabe der vorliegenden Erfindung ist es daher, eine Lösung zu schaffen mittels derer insbesondere Gerüche aus einem Luftstrom zuverlässig und gezielt entfernt werden können.

Die Aufgabe wird gemäß einem ersten Aspekt gelöst durch ein Filterelement für eine Dunstabzugshaube, das Filtermaterial zur Aufnahme von Geruchsstoffen aus einem das Filterelement anströmenden Luftstrom aufweist. Das Filterelement ist dadurch gekennzeichnet, dass das Filtermaterial aus zumindest einem mineralischen Adsorber besteht, der zumindest teilweise aus einem Schichtsilikat besteht. Des Weiteren ist das Filterelement dadurch gekennzeichnet, dass in dem Filterelement außer den mineralischen Absorbern kein weiteres Material als Filtermaterial enthalten ist und das Filtermaterial in Lagen in dem Filterelement vorliegt, wobei die Zusammensetzung des Filtermaterials von zumindest zwei Lagen unterschiedlich zueinander ist.

Die Dunstabzugshaube dient insbesondere zur Reinigung von verunreinigter Luft, die in Küchen oberhalb eines Kochfeldes auftritt. Die verunreinigte Luft wird hierbei durch Fettfilter in der Dunstabzugshaube vorgereinigt und zumindest von Fett- und Flüssigkeitspartikeln sowie anderen Schwebstoffen befreit. Allerdings werden durch diese Fettfilter Geruchsstoffe und andere Verunreinigungen nicht oder nur bedingt ausgefiltert. Das erfindungsgemäße Filterelement stellt einen als Geruchsfilter bezeichneten Filter dar, an dem Geruchsstoffe und weitere Verunreinigungen ausgefiltert werden. Die aus dem Luftstrom auszufilternden Geruchsstoffe und weitere Verunreinigungen, wie beispielsweise Wasser, werden im Folgenden als allgemein als Verunreinigungen bezeichnet.

Erfindungsgemäß weist das Filterelement Filtermaterial auf, das aus zumindest einem mineralischen Adsorber besteht, wobei der mineralische Adsorber zumindest teilweise aus einem Schichtsilikat besteht und das Filtermaterial in Lagen in dem Filterelement vorliegt, wobei das Filtermaterial von zumindest zwei Lagen unterschiedlich zueinander ist.

Als mineralische Adsorber werden erfindungsgemäß Materialien bezeichnet, die vorzugsweise natürlich vorkommende Materialen darstellen. Diese Adsorber können je nach Anwendung gegebenenfalls modifiziert sein. Im Gegensatz zu anderen Filtermaterialien, wie beispielsweise Aktivkohle, ist bei diesen mineralischen Adsorbern eine chemische Behandlung vor dem Einsatz als Filtermaterial nicht erforderlich. Dadurch werden die Herstellungskosten verringert. Zudem können mineralische Adsorber einfach entsorgt werden.

Mineralische Adsorber weisen bei dem erfindungsgemäßen Filterelement aber auch zusätzliche Vorteile auf. Insbesondere können die mineralischen Adsorber zum einen katalytisch für die Adsorption von Geruchsstoffen und anderen Verunreinigungen wirken. Weiterhin sind mineralische Adsorber in der Regel nicht brennbar. Somit können die Sicherheitsanforderungen, die an Haushaltsgeräte gestellt werden, eingehalten werden und der Einsatz des Filtermaterials ist auch in Bereichen hoher Temperatur, wie insbesondere in oder über der Dunstabzugshaube möglich. Schließlich weisen unterschiedliche mineralische Adsorber ein unterschiedlich ausgeprägtes Adsorptionsverhalten für unterschiedliche Verunreinigungen, insbesondere Geruchsstoffe, auf.

Weiterhin besteht der mineralische Adsorber der zusammen mit einem oder mehreren weiteren mineralischen Adsorbern das Filtermaterial des Filterelementes bildet, zumindest teilweise aus einem Schichtsilikat.

Es können hierbei Dreischicht-Silikate und/oder Zweischicht-Silikate in modifizierter oder unmodifizierter Form verwendet werden. Die Verwendung von Schichtsilikaten, die auch als Blatt- oder Phyllosilikate bezeichnet werden, ist unter anderem wegen deren hohen spezifischen Oberfläche von Vorteil, da dadurch die wirksame Fläche für die Ablagerung von Verunreinigungen aber auch gegebenenfalls für eine Reaktion mit Gasen, die in dem zu reinigenden Luftstrom enthalten sind, zur Verfügung steht. Schließlich weisen Schichtsilikate eine hohe lonenaustauschkapazität auf. Somit weist das Adsorbermaterial zum einen eine hohe Aufnahmefähigkeit zur Bindung ungewünschte Verunreinigungen, die flüssig oder gasförmig sein können, und zu anderen eine einfache Möglichkeit der Reaktivierung oder Regeneration auf, beispielsweise durch thermische Behandlung. Schichtsilikate sind nicht brennbar, so dass diese unbedenklich sind für den Einsatz als Filtermaterial in einem Filterelement, das oberhalb und damit in der Nähe eines Kochfeldes eingesetzt wird. Schließlich kann durch die Verwendung von Schichtsilikaten auch die Standzeit des Filterelementes verlängert werden, da diese ein größeres Aufnahmevolumen für Verunreinigungen als andere Filtermaterialien, wie beispielsweise Aktivkohle, besitzen. Zudem können Schichtsilikate gegen Reaktionen zwischen Verunreinigungen in dem Filtermaterial resistenter sein.

Erfindungsgemäß ist außer den mineralischen Adsorbern kein weiteres Material als Filtermaterial in dem Filterelement vorgesehen. Die mineralischen Adsorber bilden somit das Filtermaterial. Das Filtermaterial dient bei dem erfindungsgemäßen Filterelement zur Aufnahme von Geruchsstoffen. Insbesondere wird das Filtermaterial somit nur zur Aufnahme oder Abscheidung von Verunreinigungen verwendet. Eine weitere Funktion, insbesondere eine gezielte Abgabe von Stoffen aus dem Filtermaterial, kommt dem Filtermaterial nicht zu.

Das erfindungsgemäße Filterelement wird als sogenannter passiver Filter eingesetzt. Als passiver Filter wird hierbei ein Filter bezeichnet, bei dem die diesen anströmende Luft zuvor keiner Behandlung mit hohen Energien ausgesetzt wurde. Der den passiven Filter anströmende Luftstrom wird bei dieser Verwendung vorzugsweise lediglich beispielsweise durch einen Fettfilter in einer Dunstabzugshaube von Fett, Wasser und anderen Schwebeteilchen befreit und durch das Gebläse der Dunstabzugshaube beschleunigt. An dem passiven Filter setzten sich damit Verunreinigungen, wie Geruchsstoffe, ab und können gegebenenfalls in dem Filterelement miteinander reagieren.

Gemäß einer bevorzugten Ausführungsform wird der mineralische Adsorber bei dem erfindungsgemäßen Filterelement unbehandelt eingesetzt. Als unbehandelt wird der Adsorber insbesondere dann bezeichnet, wenn in diesem keine Sorbate eingelagert sind. Bei solchen unbehandelten mineralischen Adsorbern stehen somit die in dem Adsorber vorliegenden Hohlräume und oberflächlichen Adsorptionsflächen vollständig für die Aufnahme der Verunreinigungen aus dem Luftstrom zur Verfügung. Hierdurch kann eine besonders hohes Aufnahmevermögen des Adsorbers für Verunreinigungen, wie Geruchsstoffe, aus dem Luftstrom gewährleistet werden. Der mineralische Adsorber wird daher vorzugsweise ohne eingebrachte Sorbate verwendet. Sorbate sind insbesondere Geruchskomponenten, wie Parfüm, die in Adsorbern vor deren Anwendung eingebracht werden, um während der Verwendung aus dem Adsorber entlassen zu werden. Solche Sorbate verringern aber das Aufnahmevermögen des Adsorbers und sind erfindungsgemäß daher vorzugsweise nicht vorgesehen. Aufgrund der Verwendung von mehreren mineralischen Adsorbern kann der Luftstrom bei dem erfindungsgemäßen Filterelement so zuverlässig von Geruchsstoffen befreit werden, dass das Vorsehen von Sorbaten nicht erforderlich ist und die Luft in dem Raum, in dem die Dunstabzugsvorrichtung betrieben wird, insbesondere in der Küche, dennoch keine negativen Gerüche besitzt.

Gemäß bevorzugter Ausführungsformen stellt der mineralische Adsorber smektithaltige Tonerde, Bentonit oder Halloysit dar.

Als smektithaltige Tonerde und insbesondere smektitreiche Tonerde wird ein quellfähiges Dreischichtsilikat bezeichnet. Beispielsweise werden als Smektite hierbei Montmorillonit, Beidellit und/oder Nontronit verwendet. Bentonit bezeichnet insbesondere eine Tonmineralmischung, die zum Großteil aus Montmorillonit besteht. Halloysit stellt ein Zweischichtsilikat, insbesondere Aluminiumsilikat, dar, das eine vorwiegend röhrförmige Struktur im Mikrometerbereich und kleiner aufweist und in chemischer Hinsicht dem Kaolin ähnlich ist.

Diese bevorzugten mineralischen Adsorber haben sich als besonders geeignet zum Abscheiden von Substanzen, wie Geruchsstoffen und reaktiven Spezies, und als besonders beständig gegen Zersetzung durch diese Abscheidungen oder durch Reaktionen zwischen diesen Abscheidungen erwiesen. Zudem sind diese Adsorber an das breitbandige Anwendungsspektrum von Dunstabzugshauben angepasst.

Gemäß einer Ausführungsform weist der mineralische Adsorber eine Granulatform auf. Es ist aber auch möglich mineralische Adsorber zu verwenden, die beispielsweise in Kornform vorliegen. Da mehr als ein mineralischer Adsorber vorgesehen ist, so liegt es auch im Rahmen der Erfindung, dass die unterschiedlichen Adsorber in unterschiedlichen Formen vorliegen. Der Vorteil der Verwendung von Granulaten besteht zum einen darin, dass diese leicht miteinander gemischt werden können. Dadurch kann eine Mischung unterschiedlicher Adsorber erzeugt werden und so die Zusammensetzungen des Filtermaterials auf einfache Weise eingestellt werden kann. Zum anderen weisen Granulate eine große äußere Oberfläche auf, so dass die Adsorptionsfähigkeit der Adsorber effektiv genutzt werden kann.

Gemäß einer weiteren Ausführungsform umfasst das Filterelement einen Formkörper aus dem Filtermaterial, insbesondere einen Extrusionsformkörper. Der Formkörper weist vorzugsweise eine offene Form auf und kann beispielsweise eine Wabenstruktur besitzen, die insbesondere durch Extrusion einfach hergestellt werden kann. Durch eine solche offene Form des Formkörpers werden gezielte Angriffsflächen für die Adsorption gebildet. Zudem ist die Durchlässigkeit eines solchen Formkörper gegenüber der Verwendung einer Matte oder anderen durchgehenden Lage verbessert, so dass der Luftstrom nur geringfügig durch das Filterelement behindert wird. Schließlich kann durch die Verwendung eines Formkörpers aus Filtermaterial in dem Filterelement die Luftführung in dem Filterelement gezielt eingestellt werden. Der Formkörper besteht aus mindestens einem der mineralischen Adsorber.

Gemäß einer weiteren Ausführungsform ist das Filtermaterial auf einem Trägermaterial fixiert. Auf dem Trägermaterial fixiert, bedeutet in diesem Zusammenhang in oder auf ein Trägermaterial ein- beziehungsweise aufgebracht. Das Trägermaterial kann beispielsweise eine Matte oder ein poröser Körper sein. Diese Ausführungsform weist gegenüber der Verwendung von reinen Granulaten den Vorteil auf, dass das Filtermaterial sicher in dem Filterelement gehalten wird. Erfindungsgemäß ist in dem Filterelement das Filtermaterial in Lagen angeordnet. Als Lage wird hierbei eine Schicht bezeichnet, die sich vorzugsweise über die gesamte Fläche des Filterelementes, die senkrecht zu der Anströmrichtung steht, in der Luft das Filterelement anströmt, erstreckt. Hierdurch kann in unterschiedlichen Lagen eine gezielte Abscheidung unterschiedlicher Verunreinigungen, insbesondere Geruchsstoffe, eingestellt werden. Insbesondere kann der enormen Anzahl an Möglichkeiten, Nahrungsmittel zuzubereiten Rechnung getragen werden. Einzelne Gerüche können hierbei zuverlässig in den einzelnen Lagen des Filterelementes adsorbiert werden. Weiterhin ist die erfindungsgemäße Zusammensetzung des Filtermaterials von zumindest zwei Lagen, vorzugsweise zwei benachbarten Lagen, unterschiedlich zueinander. Hierdurch wird zum einen das gezielte Adsorbieren durch die in der jeweiligen Lage vorhandene Zusammensetzung des Filtermaterials gewährleistet. Zudem können durch die Trennung der unterschiedlichen Zusammensetzungen des Filtermaterials in unterschiedlichen Lagen auch unerwünschte konkurrierende Adsorptions- und Desorptionsvorgänge und andere Konkurrenzreaktionen verhindert werden, durch die beispielsweise Gerüche wieder aus dem Filtermaterial verdrängt werden und freigesetzt werden könnten. Die unterschiedlichen Zusammensetzungen des Filtermaterials in den unterschiedlichen Lagen wird erfindungsgemäß durch unterschiedliche Anteile einzelner mineralischer Adsorber erzielt.

Erfindungsgemäß ist das Filtermaterial in Lagen in dem Filterelement vorgesehen, so kann erfindungsgemäß in einer Lage beispielsweise ausschließlich ein erster mineralischer Adsorber und in einer weiteren Lage ausschließlich ein oder mehrere verschiedene weitere mineralische Adsorber als Filtermaterial verwendet werden. Es ist aber auch möglich in einer oder mehreren Lagen jeweils eine Mischung aus mineralischen Adsorber zu verwenden.

Liegt das Filtermaterial zumindest teilweise als Formkörper vor, können Formkörper unterschiedlicher Zusammensetzung als Lagen des Filterelementes verwendet werden. Hierdurch kann insbesondere ein Vermischen der Zusammensetzungen der einzelnen Lagen miteinander verhindert werden.

Erfindungsgemäß stellt das Filterelement somit einen mehrlagigen Filter dar. Das Filterelement kann beispielsweise aus drei Lagen bestehen. In der ersten Lage kann beispielsweise eventuell noch in dem Luftstrom vorhandener Wasserdampf gebunden werden, in einer zweiten Lage können beispielweise Kohlenwasserstoffe und in der letzten Lage extrem leichtflüchtige Substanzen, wie beispielsweise Amine, oder feinere Partikel gebunden werden. Durch eine solche sequentielle Adsorption von ansonsten miteinander konkurrierenden Substanzen, die bei dieser Ausführungsform des erfindungsgemäßen Filterelementes realisiert werden kann, kann so die Rückhaltefunktion des Filterelementes insgesamt verbessert werden. Insbesondere kann ein frühzeitiges Zusetzen des Filterelementes verhindert werden. Somit kann die Standzeit des Filterelementes erhöht werden.

Gemäß einer Ausführungsform wird das Filtermaterial in einem Trägerrahmen gehalten. Hierbei kann für den lagenförmigen Aufbau des Filterelementes für alle Lagen des Filterelementes ein einziger Rahmen verwendet werden. Es ist bei dieser Ausführungsform aber auch möglich, dass jede der Lagen des Filterelementes in einem gesonderten Rahmen gehalten wird. Ist für das Filterelement nur ein Trägerrahmen vorgesehen, so kann zur Trennung der einzelnen Lagen voneinander beispielsweise jeweils ein Gitter oder eine andere Trennvorrichtung verwendet werden. Bei dem mehrlagigen Filterelement wird durch einen Trägerrahmen dem Filterelement eine Stabilität verliehen, die den Einbau in einer Dunstabzugshaube erlaubt. Eine Beschädigung des Filtermaterials kann dabei verhindert werden. Insbesondere bei einem körnigen oder granulatförmigen Filtermaterial kann durch den Trägerrahmen zudem das Herausfallen oder anderweitiges Entweichen von Filtermaterial aus dem Filterelement verhindert werden. Ist der Trägerrahmen als umlaufender Rahmen ausgestaltet, so kann dieser beispielsweise Deckschichten halten, zwischen denen Filtermaterial in dem Filterelement angeordnet ist.

Erfindungsgemäß ist es auch möglich das Filtermaterial in oder auf ein Trägermaterial ein- beziehungsweise aufzubringen. In diesem Fall kann das mit dem Filtermaterial versehene Trägermaterial in einem Trägerrahmen gehalten werden, der dann dem in der Regel flexiblen Trägermaterial eine gewisse Stabilität verleiht.

Gemäß einem weiteren Aspekt betrifft die Erfindung eine Dunstabzugshaube, die zumindest ein Filterelement aufweist. Die Dunstabzugshaube ist dadurch gekennzeichnet, dass das Filterelement ein erfindungsgemäßes Filterelement darstellt. Das Filterelement, das Filtermaterial zur Aufnahme von Geruchsstoffen aufweist, stellt somit einen Geruchsfilter für die Dunstabzugshaube dar.

Dunstabzugshauben werden insbesondere zum Absaugen und Reinigen von Dünsten und Wrasen verwendet, die beim Kochen entstehen. Die Dunstabzugshaube ist hierbei oberhalb des Kochfeldes angeordnet. An dieser Einbauposition kommt es während des Kochvorgangs zum Teil zu hohen Temperaturen und bei einigen Kochvorgängen sogar zu einem Flammeneintritt in die Dunstabzugshaube. Durch das erfindungsgemäß verwendete Filtermaterial in Form von zumindest einem mineralischen Adsorber ist aber die Gefahr des Entzündens des Filtermaterials nicht gegeben, da die mineralischen Adsorber nicht oder nur schwer brennbar sind. Das Filterelement kann in Strömungsrichtung der die Dunstabzugshaube durchströmenden Luft vor und/oder nach dem Lüfter oder Gebläse der Dunstabzugshaube in der Dunstabzugshaube angeordnet sein. Eine solche Anordnung ist bei dem erfindungsgemäßen Filterelement möglich, da durch die Zusammensetzung des Filtermaterials aus mineralischem Adsorber oder mineralischen Adsorbern ein Zusetzen des Filters gezielt verhindert werden kann, indem die Abscheidung in dem Filterelement verteilt erfolgt. Zudem sind mineralische Adsorber aufgrund ihrer natürlichen Porosität luftdurchlässig, so dass auch eine extrem erhöhte Lüfterleistung bei einer Anordnung vor dem Gebläse der Dunstabzugshaube nicht erforderlich ist.

Mineralische Adsorber weist bei dem erfindungsgemäßen Filterelement eine Reihe von Vorteilen auf. Insbesondere können die mineralischen Adsorber katalytisch für die Adsorption von Geruchsstoffen und anderen Verunreinigungen wirken. Schließlich sind mineralische Adsorber in der Regel nicht brennbar. Somit können die Sicherheitsanforderungen, die an Haushaltsgeräte gestellt werden, eingehalten werden und der Einsatz des Filtermaterials ist auch in Bereichen hoher Temperatur, wie insbesondere über einer Dunstabzugshaube möglich.

Vorzugsweise stellt die Dunstabzugshaube eine Umlufthaube dar. Als Umlufthaube wird hierbei eine Dunstabzugshaube bezeichnet, bei der die in der Dunstabzugshaube behandelte Luft nach der Filterung zumindest teilweise wieder in den Raum geführt wird, in dem die Dunstabzugshaube betrieben wird. Dieser Raum ist in der Regel eine Küche.

Vorteile und Merkmale, die bezüglich des erfindungsgemäßen Filterelementes beschrieben werden, gelten - soweit anwendbar - entsprechend für die erfindungsgemäße Dunstabzugshaube und umgekehrt.

Die Erfindung wird im Folgenden erneut unter Bezugnahme auf die beiliegenden Zeichnungen erläutert. Hierbei zeigen:
Figur 1: eine schematische, perspektivische Ansicht einer Ausführungsform der erfindungsgemäßen Dunstabzugshaube; und
Figur 2: eine schematische Schnittansicht einer Ausführungsform eines erfindungsgemäßen Filterelementes.

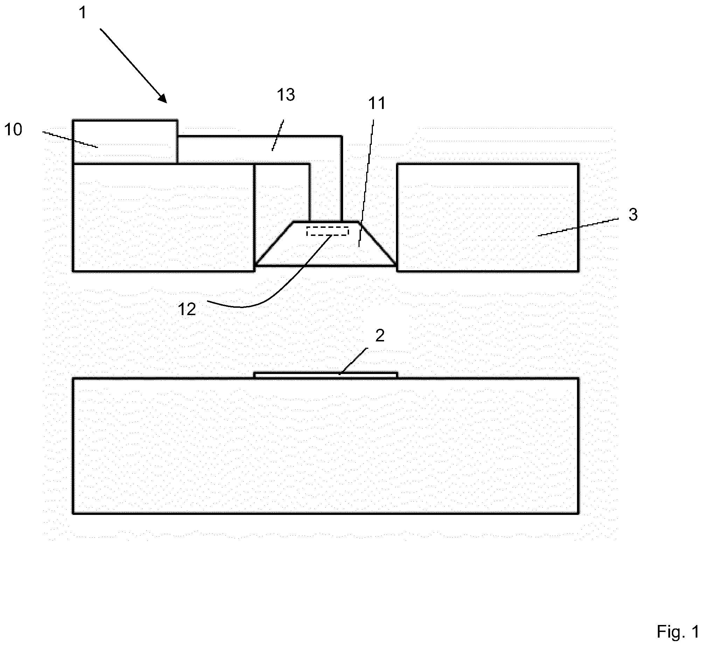

In Figur 1 ist eine Ausführungsform einer Dunstabzugsvorrichtung 1 mit einer Ausführungsform der erfindungsgemäßen Dunstabzugshaube 11 schematisch gezeigt.

In Figur 1 ist eine schematische Ansicht einer Küchenzeile gezeigt. Ein Kochfeld 2 ist in den Unterschränken der Kochzeile vorgesehen. Oberhalb des Kochfeldes 2, das einen Herd oder dergleichen darstellen kann, ist eine Ausführungsform der erfindungsgemäßen Dunstabzugshaube 11 angeordnet. In der Dunstabzugshaube 11 ist ein Lüfter (nicht gezeigt) vorgesehen, über den Dünste und Wrasen, die von dem Kochfeld 2 aufsteigen, angesaugt werden. In der Dunstabzugshaube 11 werden die Dünste und Wrasen über Filter, insbesondere Fettfilter (nicht gezeigt), von Fett- und Flüssigkeitspartikeln befreit. Von der Dunstabzugshaube 11 erstreckt sich in der dargestellten Ausführungsform nach oben eine Luftleitung 13 in Form eines Luftrohres. Die Luftleitung 13 kann, wie dargestellt, zu einer Luftaufbereitungsvorrichtung 10 führen, in der eine weitere Behandlung der Luft erfolgt. Es ist aber auch möglich, die Luft über die Luftleitung 13 in die Umgebung abzugeben. Die Luftaufbereitungsvorrichtung 10 ist in der dargestellten Ausführungsform auf einem Oberschrank 3 der Küchenzeile angeordnet.

Wie in Figur 1 angedeutet, ist in der Dunstabzugshaube 11 ein Filterelement 12 angeordnet. Dieses kann oberhalb oder unterhalb des Lüfters (nicht gezeigt) der Dunstabzugshaube 11 angeordnet sein.

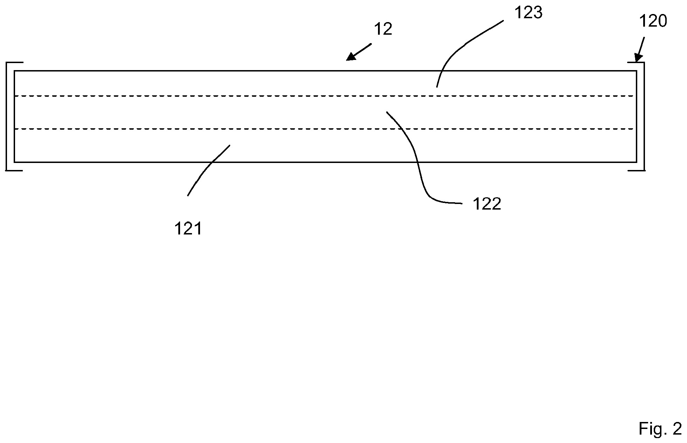

Das Filterelement 12 kann, wie in Figur 2 schematisch angedeutet ist, mehrlagig ausgestaltet sein. Hierbei variiert die Zusammensetzung des Filtermaterials bei dem mehrlagigen Aufbau von einer Lage zur anderen. So kann beispielsweise in der Lage 121, die der Anströmseite des Filterelementes 12 zugewandt ist, ein Filtermaterial vorgesehen sein, das insbesondere zur Aufnahme von Feuchtigkeit ausgelegt ist. In der weiteren Lage 122 oder den weiteren Lagen 122, 123 kann dann Filtermaterial verwendet werden, das insbesondere zur Aufnahme von Geruchsstoffen geeignet ist. Auch bei dieser mehrlagigen Ausgestaltung ist in allen Lagen als Filtermaterial zumindest ein mineralischer Adsorber vorgesehen.

In Figur 2 ist die schematische Schnittansicht des Filterelementes 12 gezeigt. Bei dieser Ausführungsform stellt das Filterelement 12 ein flächiges Filterelement 12, dar, in dem drei Lagen 121, 122, 123 oder Schichten von Filtermaterial vorgesehen sind. Diese Lagen 121, 122, 123 sind in der dargestellten Ausführungsform in einem Trägerrahmen 120 gehalten, der einen umlaufenden Rahmen darstellen kann. Ein solches flächiges Filterelement 12 kann beispielsweise, wie in Figur 1 angedeutet, in der Dunstabzugshaube 11 der Dunstabzugsvorrichtung 1 angeordnet sein.

Erfindungsgemäß werden speziell an das breitbandige Anwendungsspektrum der Dunstabzugshauben angepasste mineralische Adsorber, beispielsweise smektitreiche Tonerden, Bentonite oder Halloysite, als statt bekannter Filtermaterialien, wie Aktivkohle, verwendet. Der mineralische Adsorber, der auch als Mineralabsorber bezeichnet wird, kann beispielsweise in extrudierter Form oder auf einem Trägermaterial fixiert vorgesehen sein und zudem gegebenenfalls in einem Rahmen eingebettet sein.

Die Erfindung weist eine Reihe von Vorteilen auf. Insbesondere kann durch geeignete Wahl des mineralischen Adsorbers eine Verbesserung hinsichtlich der Geruchsbeseitigung erzielt werden, speziell im Hinblick auf durch übliche Aktivkohlefilter schlecht gebundene Stoffe. Weiterhin ist auch eine Erhöhung der Filterstandzeit mit dem erfindungsgemäßen Filterelement möglich. Die Sicherheit der Luftreinigungsvorrichtung kann zudem insgesamt erhöht werden. Außer kann auch die Geräuschentwicklung minimiert werden, da der Luftwiderstand, der durch ein aus mineralischen Adsorbern oder einem mineralischen Adsorber bestehendes Filtermaterial hervorgerufen wird, gering ist. Zudem können mineralische Adsorber häufig sehr einfach umweltverträglich entsorgt werden.

### Bezugszeichenliste

- 1: Dunstabzugsvorrichtung
- 10: Luftaufbereitungsvorrichtung
- 11: Dunstabzugshaube
- 12: Filterelement
- 120: Trägerrahmen
- 121: Lage
- 122: Lage
- 123: Lage
- 13: Luftleitung

- 2: Kochfeld
- 3: Oberschrank

## Patentansprüche

1. Filterelement für eine Dunstabzugshaube (11), das Filtermaterial zur Aufnahme von Geruchsstoffen aus einem das Filterelement (12) anströmenden Luftstrom aufweist, **dadurch gekennzeichnet, dass** das Filtermaterial aus zumindest einem mineralischen Adsorber besteht, der zumindest teilweise aus einem Schichtsilikat besteht, in dem Filterelement (12) außer den mineralischen Adsorbern kein weiteres Material als Filtermaterial enthalten ist und das Filtermaterial in Lagen (121, 122, 123) in dem Filterelement (12) vorliegt, wobei die Zusammensetzung des Filtermaterials von zumindest zwei Lagen (121, 122, 123) unterschiedlich zueinander ist.

2. Filterelement nach Anspruch 1, **dadurch gekennzeichnet, dass** in dem mineralischen Adsorber keine Sorbate eingelagert sind.

3. Filterelement nach einem der Ansprüche 1 oder 2, **dadurch gekennzeichnet, dass** der mineralische Adsorber smektithaltige Tonerde, Bentonit oder Halloysit darstellt.

4. Filterelement nach einem der Ansprüche 1 bis 3, **dadurch gekennzeichnet, dass** der mineralische Adsorber eine Granulatform aufweist.

5. Filterelement nach einem der Ansprüche 1 bis 4, **dadurch gekennzeichnet, dass** das Filterelement (12) einen Formkörper aus dem Filtermaterial, insbesondere einen Extrusionsformkörper, umfasst.

6. Filterelement nach einem der Ansprüche 1 bis 5, **dadurch gekennzeichnet, dass** das Filtermaterial auf einem Trägermaterial fixiert ist.

7. Filterelement nach einem der Ansprüche 1 bis 6, **dadurch gekennzeichnet, dass** das Filtermaterial in einem Trägerrahmen (120) gehalten wird.

8. Dunstabzugshaube, die zumindest ein Filterelement aufweist, **dadurch gekennzeichnet, dass** das Filterelement (12) ein Filterelement (12) gemäß einem der Ansprüche 1 bis 7 darstellt.

9. Dunstabzugshaube nach Anspruch 8, **dadurch gekennzeichnet, dass** das Filterelement (12) in Strömungsrichtung vor und/oder nach dem Lüfter der Dunstabzugshaube (11) angeordnet ist.

## Claims

1. Filter element for an extractor hood (11), which has filter material for absorbing odorous substances from an air flow that flows against the filter element (12), **characterised in that** the filter material consists of at least one mineral adsorber, which at least partially consists of a phyllosilicate, no further material is contained as filter material in the filter element (12) other than the mineral adsorbers and the filter material is present in layers (121, 122, 123) in the filter element (12), wherein the composition of the filter material of at least two layers (121, 122, 123) is different from one another.

2. Filter element according to claim 1, **characterised in that** no sorbates are incorporated in the mineral adsorber.

3. Filter element according to one of claims 1 or 2, **characterised in that** the mineral adsorber represents smectite-containing clay, bentonite or halloysite.

4. Filter element according to one of claims 1 to 3, **characterised in that** the mineral adsorber has a granulate form.

5. Filter element according to one of claims 1 to 4, **characterised in that** the filter element (12) comprises a moulded body consisting of the filter material, in particular an extrusion-moulded body.

6. Filter element according to one of claims 1 to 5, **characterised in that** the filter material is fixed to a support material.

7. Filter element according to one of claims 1 to 6, **characterised in that** the filter material is held in a support frame (120).

8. Extractor hood, which has at least one filter element, **characterised in that** the filter element (12) represents a filter element (12) according to one of claims 1 to 7.

9. Extractor hood according to claim 8, **characterised in that** the filter element (12) is arranged upstream and/or downstream of the fan of the extractor hood (11) in the direction of flow.

## Revendications

1. Élément filtrant pour une hotte aspirante (11), lequel présente une matière filtrante destinée à réceptionner des substances odorantes provenant d'un courant d'air affluant sur l'élément filtrant (12), **caractérisé en ce que** la matière filtrante est constituée d'au moins un adsorbant minéral qui est constitué au moins en partie d'un phyllosilicate, **en ce qu'**aucune autre matière filtrante, à part les adsorbants minéraux, n'est contenue dans l'élément filtrant (12) en tant que matière filtrante, et **en ce que** la matière filtrante est présente en couches (121, 122, 123) dans l'élément filtrant (12), la composition de la matière filtrante d'au moins deux couches (121, 122, 123) étant différente l'une par rapport à l'autre.

2. Élément filtrant selon la revendication 1, **caractérisé en ce qu'**aucun sorbate n'est inséré dans l'adsorbant minéral.

3. Élément filtrant selon l'une quelconque des revendications 1 ou 2, **caractérisé en ce que** l'adsorbant minéral représente de l'argile à smectite, de la bentonite ou de l'halloysite.

4. Élément filtrant selon l'une quelconque des revendications 1 à 3, **caractérisé en ce que** l'adsorbant minéral présente une forme granulaire.

5. Élément filtrant selon l'une quelconque des revendications 1 à 4, **caractérisé en ce que** l'élément filtrant (12) comprend un corps moulé à partir de la matière filtrante, notamment un corps moulé par extrusion.

6. Élément filtrant selon l'une quelconque des revendications 1 à 5, **caractérisé en ce que** la matière filtrante est fixée sur une matière de support.

7. Élément filtrant selon l'une quelconque des revendications 1 à 6, **caractérisé en ce que** la matière filtrante est maintenue dans un cadre de support (120).

8. Hotte filtrante qui présente au moins un élément filtrant, **caractérisée en ce que** l'élément filtrant (12) représente un élément filtrant (12) selon l'une quelconque des revendications 1 à 7.

9. Hotte filtrante selon la revendication 8, **caractérisée en ce que** l'élément filtrant (12) est disposé en direction d'écoulement en amont et/ou en aval du ventilateur de la hotte aspirante (11).
